# EUROPEAN PATENT SPECIFICATION

(11) **EP 3 016 435 B1**
(45) Date of publication and mention of the grant of the patent: **22.08.2018**
(21) Application number: 14829288.1
(22) Date of filing: 10.03.2014
(51) Int. Cl.: H04W 36/06

(54) **CHANNEL SWITCHING METHOD AND ACCESS POINT**
VERFAHREN ZUR KANALUMSCHALTUNG UND ZUGANGSPUNKT
PROCÉDÉ DE COMMUTATION DE CANAL ET POINT D'ACCÈS

(30) Priority: 24.07.2013 CN 201310313833
(43) Date of publication of application: 04.05.2016
(73) Proprietor: Huawei Technologies Co., Ltd., Longgang District Shenzhen, Guangdong 518129 (CN)
(72) Inventor: WU, Tianyu, Shenzhen Guangdong 518129 (CN); LI, Yunbo, Shenzhen Guangdong 518129 (CN)
(74) Representative: Epping - Hermann - Fischer
(86) International application number: PCT/CN2014/073094
(87) International publication number: WO 2015/010474

(56) References cited:
- CN-A- 1 640 062
- CN-A- 102 291 794
- CN-A- 102 724 727
- US-A1- 2006 171 335
- US-A1- 2013 336 140
- "Motorola MTS 2 TETRA Base Station Settingat", , 5 July 2007 (2007-07-05), pages 1-4, XP055273613, Retrieved from the Internet: URL:http://www.tetrahaberlesme.com.tr/Tunc /Tetra/role/MTS2/MTS2.pdf [retrieved on 2016-05-19]

## Description

### FIELD

The present invention relates to the field of communication technology, and particularly to a channel switching method and an access method.

### BACKGROUND

In wireless local area networks (wireless local area networks, WLAN) system, a carrier sense multiple access with collision avoidance (carrier sense multiple access with collision avoidance, CSMA/CA) mechanism is used for channel contention in data sending of a station (Station, STA). In the CSMA/CA mechanism, an active avoiding collision manner, rather than a passive sensing manner, is used to solve collision, which can meet a requirement that it is not easy to accurately sense the collision. However, the larger the number of STAs which initiate the contention in a basic service set (basic service set, BSS), the greater a probability of collision. If transmissions of all STAs fail and perform backoff, time frequency resource will be wasted. In addition, in a current WLAN system, a STA may use a whole frequency band of the BSS to perform the transmission in a case of a successful contention. The transmission in the whole frequency band may fail once one channel of spectrum is interfered. In this case, this mechanism will result in that a utilization ratio of the spectrum is reduced. At present, a method for improving a spectrum efficiency of the WLAN system is to adopt a transmission manner based on scheduling. That is, an access point (access point, AP) allocates resources to the STAs on a control channel and schedules data transmissions of the STAs, to avoid collision in the CSMA/CA mechanism. Control information should be transmitted on the control channel, and resource allocation and scheduling information for the STA will be lost if interference occur in the control channel, which will significantly affect system performance. An important problem to be solved in the solution is reliability of the control channel.

In conventional technologies, there are the following two ways to solve the reliability of the channel.

In a first way, a robust modulation and coding scheme (Modulation and coding scheme, MCS) is used for the control channel, to improve the reliability of the channel. For example, a MCS of a binary phase shift keying (binary phase shift keying, BPSK) having 1/2 code ratio is used; a modulation and coding scheme of MCS0rep2 is defined in IEEE 802.11ah standard, that is, a modulation symbol of BPSK having 1/2 code ratio is sent twice.

In a second way, a signal is transmitted repeatedly on multiple channels. For example, in IEEE 802.11ac system, in order to guarantee reliability of a preamble signal, the same preamble signal is transmitted repeatedly on each 20MHz channel. This way requires that multiple control channels operate simultaneously to transmit the same control information.

However, in the first way described above, the robust MCS can not completely guarantee normal operation of the control channel, and unsuccessful transmission may occur in the case of serious interference. In addition, in a case that an too robust MSC is used to raise the robustness of the control channel as much as possible, for example, a MCS0 operating multiple retransmission, an efficiency of the control channel will be reduced greatly. Even in the case that the control channel has a good condition, spectrum efficiency thereof will also be low. In the second way described above, overhead of the control signaling in the system is too large, and too much frequency resource is occupied. Therefore, the resource is wasted seriously when the control channel has a good communication condition.

In US Patent Publication No. US2013/0336140, a method for dynamically switching a channel is provided. The method includes: detecting, on a current working channel, a signal strength of data sent by an interfering access point; determining whether the detected signal strength is greater than a switching threshold; detecting signal strengths of data sent by interfering access points in available channels, when the detected signal strength is greater than the switching threshold; and switching the current working channel to one of the available channels.

In US Patent Publication No. 2006/0171335, potential alternate channels in a wireless network are periodically analyzed and ranked in terms of interference. The best ranked alternate channel is selected as the new operating channel if a decision is made to move from the current operating channel to an alternate channel.

### SUMMARY

A channel switching method and an access point are provided according to embodiments of the present invention, to improve transmission efficiency of communication on a control channel and avoid resource waste.

A channel switching method according to a first aspect of an embodiment of the present invention includes:
selecting, by an access point AP, at least one sub-channel from sub-channels other than a main control channel as a standby control channel;
periodically broadcasting, by the AP, an identifier of the standby control channel to a station STA within a coverage of the AP on the main control channel, to notify the STA of a spectrum position of the standby control channel; and
switching, by the AP, from the main control channel to the standby control channel, to transmit at least one of control information and scheduling information on the standby control channel, in a case that the AP detects that the main control channel is interfered; and sending, by
the AP, a channel switching indication frame to the STA, to notify the STA to switch to the standby control channel and receive the at least one of the control information and the scheduling information.

In conjunction with the first aspect of the embodiment of the present invention, in a first implementation of the first aspect of the embodiments of the present invention, before the selecting, by the AP, at least one sub-channel from the sub-channels other than the main control channel as the standby control channel, the channel switching method further includes: detecting, by the AP, average interference powers or maximum interference powers of the sub-channels in a descending order of spectrum spans between the sub-channels and the main control channel;

the selecting, by the AP, at least one sub-channel from the sub-channels other than the main control channel as the standby control channel includes:
in a case that the AP determines that at least one sub-channel has an average interference power less than a first threshold or a maximum interference power less than a second threshold, selecting, by the AP, the at least one sub-channel as the standby control channel.

In conjunction with the first aspect of the embodiments of the present invention, in a second implementation of the first aspect of the embodiment of the present invention, before the selecting, by the AP, at least one sub-channel from the sub-channels other than the main control channel as the standby control channel, the channel switching method further includes: detecting, by the AP, an average interference power or a maximum interference power of each of all sub-channels other than the main control channel;

the selecting, by the AP, at least one sub-channel from the sub-channels other than the main control channel as the standby control channel includes: selecting, by the AP, at least one sub-channel having an average interference power less than a first threshold or having a maximum interference power less than a second threshold, as the standby control channel.

In conjunction with the first implementation or the second implementation of the first aspect of the embodiment of the present invention, in a third implementation of the first aspect of the embodiment of the present invention, in a case that there is one standby control channel and the standby control channel is a first standby control channel, after the switching, by the AP, from the main control channel to the first standby control channel, the channel switching method further includes:
selecting, by the AP, a sub-channel having a smallest average interference power or a smallest maximum interference power from sub-channels other than the first standby control channel and the main control channel, as a second standby control channel; and
switching, by the AP, from the first standby control channel to the second standby control channel, to transmit at least one of the control information and the scheduling information on the second standby control channel, in a case that the AP detects that the first standby control channel is interfered.

In conjunction with the first implementation or the second implementation of the first aspect of the embodiments of the present invention, in a fourth implementation of the first aspect of the embodiments of the present invention, in a case that there are multiple standby control channels, after the switching, by the AP, from the main control channel to a standby control channel having a smallest average interference power or a smallest maximum interference power of multiple standby control channels, the channel switching method further includes: switching, by the AP, from a current standby control channel to another standby control channel, to transmit at least one of the control information and the scheduling information on the another standby control channel, in a case that the AP detects that a current standby control channel is interfered.

In conjunction with the first aspect of the embodiment of the present invention, in a fifth implementation of the first aspect of the embodiment of the present invention, the channel switching method further includes: using, by the AP, the standby control channel as a data channel, in a case that the AP does not detect that the main control channel is interfered currently.

An access point AP is provided according to a second aspect of an embodiment of the present invention, which includes:
a selecting unit configured to select at least one sub-channel from sub-channels other than a main control channel as a standby control channel;
a broadcasting unit configured to periodically broadcast an identifier of the standby control channel to a station STA within a coverage of the AP on the main control channel, to notify the STA of a spectrum position of the standby control channel; and
a processing unit configured to: switch from the main control channel to the standby control channel, to transmit at least one of control information and scheduling information on the standby control channel, in a case that it is detected that the main control channel is interfered; and send a channel switching indication frame to the STA, to notify the STA to switch to the standby control channel and receive the at least one of the control information and the scheduling information.

In conjunction with the second aspect of the embodiment of the present invention, in a first implementation of the second aspect of the embodiment of the present invention, the AP further includes a first detecting unit configured to detect average interference powers or maximum interference powers of sub-channels in a descending order of spectrum spans between the sub-channels and the main control channel;

where the selecting unit includes: a first selecting sub-unit configured to, in a case that at least one sub-channel having an average interference power less than a first threshold or a maximum interference power less than a second threshold is determined, select the at least one sub-channel as the standby control channel.

In conjunction with the second aspect of the embodiments of the present invention, in a second implementation of the second aspect of the embodiment of the present invention, the AP further includes a second detecting unit configured to detect average interference powers or maximum interference powers of all sub-channels other than the main control channel;

where the selecting unit further includes: a second selecting sub-unit configured to select at least one sub-channel having an average interference power less than a first threshold or a maximum interference power less than a second threshold, as the standby control channel.

In conjunction with the first implementation or the second implementation of the second aspect of the embodiment of the present invention, in a third implementation of the second aspect of the embodiment of the present invention, in a case that there is one standby control channel and the standby control channel is a first standby control channel, the first selecting unit and the second selecting unit is further configured to:
select a sub-channel having a smallest average interference power or a smallest maximum interference power from sub-channels other than the first standby control channel and the main control channel, as a second standby control channel;
and the processing unit is further configured to switch from the first standby control channel to the second standby control channel, to transmit at least one of the control information and the scheduling information on the second standby control channel, in a case that it is detected that the first standby control channel is interfered.

In conjunction with the first implementation or the second implementation of the second aspect of the embodiment of the present invention, in a fourth implementation of the second aspect of the embodiment of the present invention, in a case that there are multiple standby control channels, after the processing unit is configured to switch from the main control channel to a standby control channel having a smallest average interference power or a smallest maximum interference power of the multiple standby control channels, the processing unit is further configured to:
switch from a current standby control channel to another standby control channel, to transmit at least one of the control information and the scheduling information on the another standby control channel, in a case that it is detected that the current standby control channel is interfered.

In conjunction with the second aspect of the embodiment of the present invention, in a fifth implementation of the second aspect of the embodiment of the present invention, the processing unit is further configured to use the standby control channel as a data channel, in a case that it is not detected that the main control channel is interfered currently.

In the above technical solution, the embodiments of the present invention have the following advantages.

In the embodiments of the present invention, the AP selects at least one sub-channel from the sub-channels other than the main control channel as the standby control channel; and switches from the main control channel to the standby control channel, to transmit at least one of the control information and the scheduling information on the standby control channel, when detecting that the main control channel is interfered, so that the AP can use the selected standby control channel which can communicate normally to transmit the at least one of the control information and the scheduling information in a case that the main control channel has been interfered and can not communicate normally. Therefore, control signaling interaction in the system can be recovered rapidly, communication efficiency of the control channel is raised, and resource waste caused by transmitting the same information on multiple control channels simultaneously is avoided.

### BRIEF DESCRIPTION OF THE DRAWINGS

In order to more clearly illustrate the technical solution in embodiments of the present invention or in the conventional technology, in the following, drawings required in the description of the embodiments or the conventional technology will be introduced simply. Obviously, the drawings in the following description are just some embodiments of the invention. For those skilled in the art, other drawings can also be obtained according to the drawings without any creative work
Figure 1 is a schematic diagram of a channel switching method according to an embodiment of the present invention;
Figure 2 is a schematic diagram of a channel switching method according to another embodiment of the present invention;
Figure 3 is a schematic diagram of an access point of an embodiment of the present invention;
Figure 4 is a schematic diagram of an access point of another embodiment of the present invention; and
Figure 5 is a schematic diagram of an access point of another embodiment of the present invention.

### DETAILED DESCRIPTION OF EMBODIMENTS

Hereinafter, the technical solutions in the embodiment of the present invention will be described clearly and completely in conjunction with the drawings in the embodiments of the present invention. Obviously, the described embodiments are only a part of the embodiments of the present invention, but not all the embodiments. All the other embodiments obtained by those skilled in the art based on the embodiments in the present invention without creative work will fall within the scope of protection of the present invention.

A channel switching method and an access point are provided according embodiments of the present invention, to improve reliability of communication of the control channel.

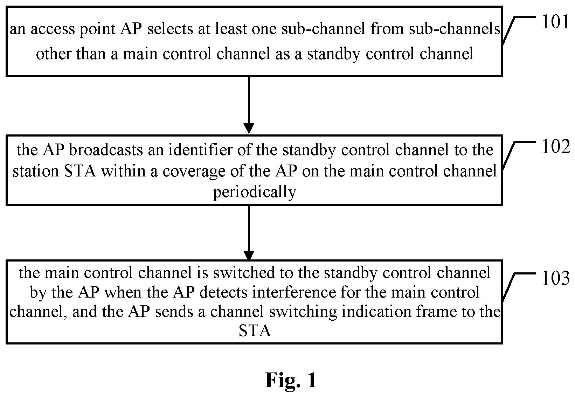

With reference to Figure 1, the channel switching method according to an embodiment of the present invention includes:
In 101, an access point AP selects at least one sub-channel from sub-channels other than a main control channel as a standby control channel.

In a communication system, for example, a WLAN system, a special control channel is used to transfer at least one of control information and scheduling information. The AP sends the at least one of the control information and the scheduling information to all STAs within the coverage of the AP on the control channel. A main control channel is used herein to indicate the special control channel.

In general, in a case that the main control channel is interfered, the control information and the scheduling information of the STA may be lost, so that the main control channel can not operate normally. Therefore, in the embodiment, the AP selects at least one sub-channel from sub-channels other than the main control channel as a standby control channel. The standby control channel may replace the main control channel to transfer the at least one of the control information and the scheduling information to all STAs within the coverage of the AP, when the main control channel is interfered and can not operate normally.

In 102, the AP broadcasts an identifier of the standby control channel to the station STA within a coverage of the AP on the main control channel periodically, to notify the STA of a spectrum position of the standby control channel.

After selecting the sub-channel as the standby control channel, the AP broadcasts an identifier of a selected standby control channel to all stations STAs within the coverage of the AP on the main control channel periodically, to notify all STAs of a spectrum position of the standby control channel.

In 103, the main control channel is switched to the standby control channel by the AP when the AP detects interference for the main control channel, and the AP sends a channel switching indication frame to the STA.

The AP can periodically detect whether the main control channel is interfered at a preset detection time interval.

For example, the AP may detect whether the main control channel is interfered based on a case that the AP or the STA decodes a control frame on the main control channel. The AP may consider that the main control channel is interfered, in the case that the AP or the STA can not correctly decode the control frame on the main control channel. Alternatively, the AP can preset an interference power threshold, and consider that the main control channel is interfered when an interference signal having a power larger than the preset interference power threshold is detected.

In addition, the AP may also receive information on the interference for the main control channel reported by the STA. In the embodiment, an interference signal is a signal bringing damage for sending or receiving a useful signal; and the interference signal may come from other WLAN system, or may be other unknown interference signal.

When the AP detects the interference for the main control channel, the main control channel is switched to the standby control channel by the AP, to transmit at least one of the control information and the scheduling information on the standby control channel. The AP sends the channel switching indication frame to the STA, to notify the STA to switch to the standby control channel used by the AP and receive the at least one of the control information and the scheduling information. Specifically, the control information may include a physical resource request/response frame, an acknowledge frame and a block acknowledge frame. The scheduling information may include an uplink/downlink scheduling user and physical resource allocation for a user.

In the embodiment, the AP selects at least one sub-channel from the sub-channels other than the main control channel as the standby control channel, and switches to the standby control channel from the main control channel to transmit at least one of the control information and the scheduling information on the standby control channel when the interference of the main control channel is detected, so that the AP can transmit the at least one of the control information and the scheduling information on the selected standby control channel which can communicate normally when the main control channel has been interfered and can not communicate normally. Therefore, control signaling interaction in the system can be recovered rapidly, transmission efficiency of communication of the control channel is raised, and resource waste caused by transmitting the same information on multiple control channels simultaneously is avoided.

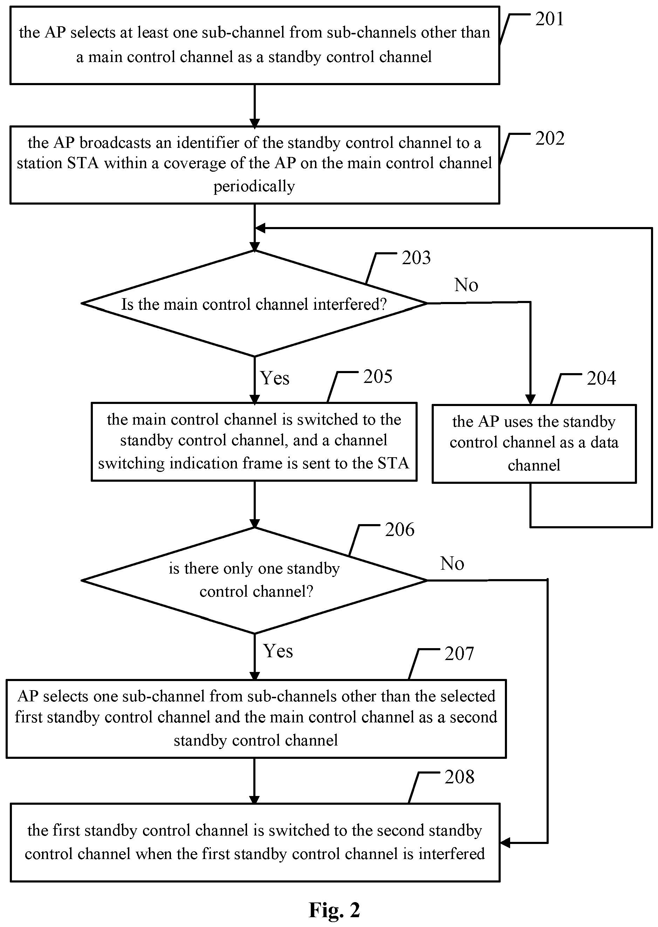

For easy understanding, a channel switching method according to an embodiment of the present invention is described below by a specific embodiment. With reference to Figure 2, the channel switching method according to another embodiment of the present invention includes:
In 201, the AP selects at least one sub-channel from sub-channels other than a main control channel as a standby control channel.

In order to select a suitable sub-channel as the standby control channel, in the embodiment, the AP may select a sub-channel, having less interference from an interference signal, from the sub-channels as the standby control channel. A method for selecting the standby control channel has the following two ways.

In a first way, the AP starts to perform a detection from a sub-channel having a largest spectrum span to the main control channel, determines at least one sub-channel having an average interference power within a channel detection time period less than a first threshold or at least one sub-channel having a maximum interference power less than a second threshold; and selects the determined at least one sub-channel as the standby control channel.

If multiple standby control channels are selected, the AP may maintain a standby control channel list. Multiple standby control channels in the standby control channel list have a priority order, which is set as that the larger the spectrum span from a standby control channel to the main control channel, the higher the priority of the standby control channel.

In other word, if multiple sub-channels have the average interference power within the channel detection time period less than the first threshold or the maximum interference power less than the second threshold, a sub-channel having a largest spectrum span to the main control channel is selected as the standby control channel preferably.

An object of selecting the standby control channel in this way is to select a sub-channel far away from the main control channel as the standby control channel, to reduce a correlation between the standby control channel and the main control channel. In this way, it is avoided that the selected standby control channel is seriously interfered from an interference signal interfering with the main control channel.

In addition, the priority order of the multiple standby control channels in the standby control channel list may be determined by average interference powers or maximum interference powers of standby control channels. That is, the smaller the average interference power or the maximum interference power, the higher the priority of the standby control channel.

It can be understood that, if the AP selects only one standby control channel, the AP may start to perform the detection from the sub-channel having a largest spectrum span to the main control channel, and selects the first one of the detected sub-channels having an average interference power within the channel detection time period less than the first threshold or a maximum interference power less than the second threshold as the standby control channel.

In a second way, the AP will detect sub-channels other than the main control channel sequentially. For example, the AP detects all sub-channels in an ascending order of sub-channel numbers or in a descending order thereof in sequence. The AP selects one or more sub-channels having an average interference power within the channel detection time period less than the first threshold or a maximum interference power less than the second threshold as the standby control channel.

If multiple standby control channels are selected, the AP may maintain a standby control channel list. Similarly, the multiple standby control channels in the standby control channel list have a priority order, for example, the priority order can be set as that the smaller the average interference power or the smaller the maximum interference power, the higher the priority of the standby control channel.

In other word, if multiple sub-channels have the average interference power within the channel detection time period less than the first threshold or the maximum interference power less than the second threshold, a channel having a smaller average interference power or a smaller maximum interference power is selected as the standby control channel preferably. In this way, the sub-channel having less interference is selected from the sub-channels as the standby control channel.

It can be understood that, if the AP selects only one standby control channel, the AP may perform the detection on sub-channels other than the main control channel sequentially. For example, the AP detects sub-channels in an ascending order of the sub-channel numbers or in a descending order thereof in sequence. The AP selects a sub-channel having a smallest average interference power within the channel detection time period or a smallest maximum interference power as the standby control channel.

In 202, the AP broadcasts an identifier of the standby control channel to a station STA within a coverage of the AP on the main control channel periodically.

The AP broadcasts the identifier of the selected standby control channel to all STAs on the main control channel, to notify all STAs of a spectrum position of the standby control channel. Specifically, the identifier of the standby control channel may be any unique symbol indicating the standby control channel, for example, a channel number.

In order to enable an asleep STA to rapidly receive the identifier of the standby control channel after waking up, the AP can periodically broadcast the identifier of the selected standby control channel on the main control channel.

It can be understood that the AP may periodically broadcast the standby control channel list on the main control channel in the case that the multiple standby control channels are selected and the standby control channel list is maintained.

In 203, the AP determines whether the main control channel is interfered, and performs step 204 in the case that the main control channel is not interfered, and performs step 205 in the case that the main control channel is interfered.

The AP may periodically detect whether the main control channel is interfered at a preset detection time interval.

For example, the AP may detect whether the main control channel is interfered based on a case that the AP or the STA decodes a control frame on the main control channel. The AP may consider that the main control channel is interfered, in the case that the AP or the STA can not correctly decode the control frame on the main control channel.

Alternatively, the AP may preset an interference power threshold, and consider that the main control channel is interfered when an interference signal having a power larger than the preset interference power threshold is detected. In the embodiment, the interference signal is a signal bringing damage for receiving a useful signal, and the interference signal may come from other WLAN system, or may be other unknown interference signal.

In addition, the AP may also receive an interference condition of the main control channel reported by the STA.

For example, the STA may report fault information to the AP, in the case that the STA can not correctly receive control information or scheduling information on the main control channel or the STA detects the interference of the main control channel. A way of reporting the fault information is to report the fault information on the main control channel or a selected sub-channel having better communication quality.

The reported fault information includes at least one of the following information: interference power of the main control channel/standby control channel, signal to interference plus noise ratio (Signal to Interference plus Noise Ratio, SINR), an indication that the main control channel/standby control channel is unavailable, and information for indicating a channel condition. For example, 2 bits may be used to indicate a condition of the main control channel/standby control channel, 11 indicates that the channel condition is very good, 10 indicates that the channel condition is good, 01 indicates that the channel condition is poor, 00 indicates that the channel condition is very poor. The AP determines whether the main control channel is interfered based on the information reported by the STA.

In 204, the AP uses the standby control channel as a data channel; and returns to step 203, which continues determining whether the main control channel is interfered.

The AP uses the selected standby control channel as the data channel in a case that the AP determines that the main control channel is not interfered currently, and the data channel is often used to transfer service data, for example, a video, voice, a picture. The AP may schedule uplink and downlink data to transmit them on the standby control channel, so as to take full advantage of resource.

In 205, the main control channel is switched to the standby control channel by the AP, and the AP sends a channel switching indication frame to the STA.

The main control channel is switched to the standby control channel by the AP, to transmit at least one of the control information and the scheduling information to all STAs within the coverage of the AP on the standby control channel, in the case that the AP determines that the main control channel is interfered. The AP sends the channel switching indication frame to all STAs within the coverage of the AP, to indicate all STAs to switch to the standby control channel used by the AP currently based on an indication of the channel switching indication frame when the STAs receive the channel switching indication frame from the AP, and therefore to receive the control information and the scheduling information.

In a process of switching from the main control channel to the standby control channel, the AP may send the same control information on the main control channel and the standby control channel simultaneously, to raise reliability of data sent by the control channel. After the main control channel is successfully switched to the standby control channel, the AP only needs to send the control information and the scheduling information on the standby control channel, to save signaling overhead.

In 206, the AP determines whether there is only one standby control channel, and performs step 207 in the case that there is only one standby control channel, and performs step 208 in the case that there is more than one standby control channel.

The AP will continues determining that there is one or more standby control channels selected in step 201 after the main control channel is switched to the standby control channel when the main control channel is interfered.

In 207, the AP selects one sub-channel from sub-channels other than the selected first standby control channel and the main control channel as a second standby control channel.

In a case that only one standby control channel is selected in step 201 and the standby control channel is a first control channel, the AP selects another sub-channel having a smallest average interference power and a smallest maximum interference power from sub-channels other than the selected first standby control channel and the main control channel as a second standby control channel, to avoid a case that the first standby control channel is interfered to influence data transmission.

In 208, the AP uses the second standby control channel as the main control channel in a case that the first standby control channel is interfered.

Similarly, the AP may detect whether the first standby control channel is interfered, and determine whether the first standby control channel is interfered based on information reported by the STA. The first standby control channel may be switched to the second standby control channel by the AP, to transmit at least one of the control information and the scheduling information on the second standby control channel, when it is determined that the first standby control channel is interfered. If the data can not be transmitted due to the interference of the second standby control, a third standby control channel can be selected according to the above method or based on the standby control channel list, the second standby control channel is switched to the third standby control channel.

In the embodiment, the AP selects at least one sub-channel from the sub-channels other than the main control channel as the standby control channel, and broadcasts the identifier of the standby control channel to the STA. The main control channel is switched to the standby control channel, to transmit at least one of the control information and the scheduling information on the standby control channel when the interference of the main control channel is detected. In this way, the AP can transmit the at least one of the control information and the scheduling information on the selected standby control channel which can communicate normally, when the main control channel has been interfered and can not communicate normally. Therefore, control signaling interaction in the system can be recovered rapidly. In addition, the AP transmits data information on the selected standby control channel when the main control channel is not interfered, to raise the communication efficiency of the control channel, and take full advantage of the system resource.

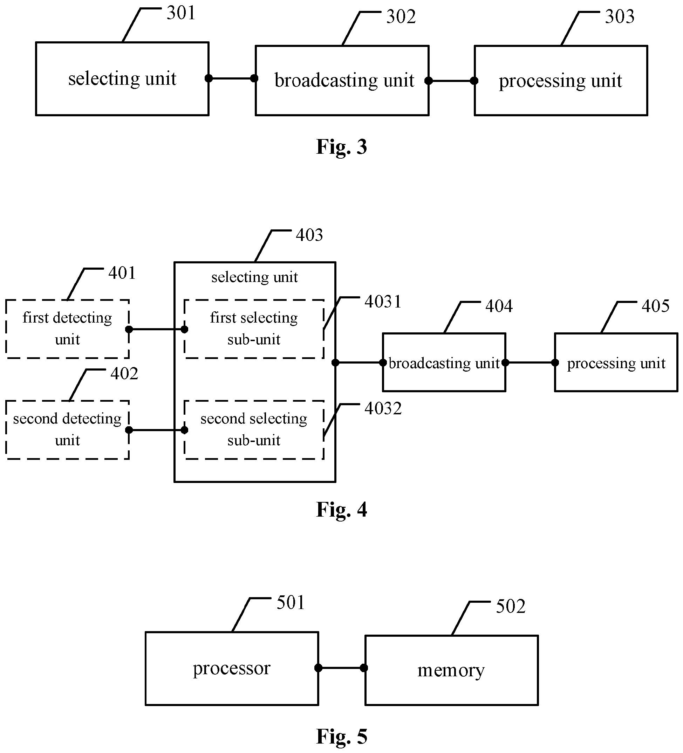

The AP according to an embodiment of the present invention is described below. With reference to Figure 3, the AP according to an embodiment of the present invention includes the follows.

A selecting unit 301 is configured to select at least one sub-channel from sub-channels other than a main control channel as a standby control channel.

A broadcasting unit 302 is configured to periodically broadcast an identifier of the standby control channel to a station STA within a coverage of the AP on the main control channel, to notify the STA of a spectrum position of the standby control channel.

A processing unit 303 configured to switch from the main control channel to the standby control channel, to transmit at least one of control information and scheduling information on the standby control channel, in a case that it is detected that the main control channel is interfered; and send a channel switching indication frame to the STA, to notify the STA to switch to the standby control channel and receive the at least one of the control information and the scheduling information.

In the embodiment, the selecting unit selects at least one sub-channel from the sub-channels other than the main control channel as the standby control channel, the broadcasting unit broadcasts the identifier of the standby control channel to all STAs within the coverage of the AP, and the processing unit switches from the main control channel to the standby control channel when the interference of the main control channel is detected, to transmit at least one of the control information and the scheduling information on the standby control channel. In this way, the processing unit can transmit at least one of the control information and the scheduling information on the selected standby control channel which can communicate normally, when the main control channel has been interfered and can not communicate normally, therefore control signaling interaction in the system can be recovered rapidly, and transmission efficiency of communication on the control channel is raised, and resource waste is avoided.

For easy understanding, the AP in the embodiment of the present invention will be described below by a specific embodiment. With reference to Figure 4, an AP according to another embodiment of the present invention includes the follows.

A first detecting unit 401 is configured to detect average interference powers or maximum interference powers of sub-channels in a descending order of spectrum spans between the sub-channels and the main control channel.

Alternatively, a second detecting unit 402 is configured to detect average interference powers or maximum interference powers of all sub-channels other than the main control channel.

A selecting unit 403 is configured to select at least one sub-channel from sub-channels other than the main control channel as a standby control channel.

Specifically, the selecting unit 403 can use a first selecting sub-unit 4031 to select the standby control channel. That is, in a case that at least one sub-channel having an average interference power less than a first threshold or a maximum interference power less than a second threshold is found based on the detection of the first detection unit 401, the first selecting sub-unit 4031 selects the at least one sub-channel as the standby control channel.

Alternatively, the selecting unit 403 uses a second selecting sub-unit 4032 to select the standby control channel. That is, the second selecting sub-unit 4032 selects at least one sub-channel having an average interference power less than a first threshold or a maximum interference power less than a second threshold as the standby control channel based on the detection of the second detection unit 402.

The broadcasting unit 404 is configured to periodically broadcast an identifier of the selected standby control channel to all stations STAs on the main control channel, to notify all STAs of a spectrum position of the standby control channel.

The processing unit 405 is configured to switch to the standby control channel from the main control channel, to transmit at least one of control information and scheduling information on the standby control channel, when interference of the main control channel is detected.

In order to understand the embodiment described above better, the channel switch method according to the embodiment applied to a data interaction way of the AP will be illustrated below by a specific application scenario.

In a communication system, for example, a WLAN system, a special control channel is used to transfer at least one of control information and scheduling information. The AP sends the at least one of the control information and the scheduling information to all STAs within the coverage of the AP on the control channel. A main control channel is used herein to indicate the special control channel.

In general, in a case that the main control channel is interfered, the control information and the scheduling information of the STA may be lost, so that the main control channel can not operate normally. Therefore, in the embodiment, the selecting unit 403 selects at least one sub-channel from sub-channels other than the main control channel as a standby control channel, the standby control channel may replace the main control channel to transfer the at least one of the control information and the scheduling information to all STAs within a coverage of the AP in a case that the main control channel is interfered and can not operate normally. A way of selecting the standby control channel by the selecting unit 403 can include the following two ways.

In a first way, the first detecting unit 401 starts to perform a detection from a sub-channel having a largest spectrum span to the main control channel. In the case that the first detecting unit 401 detects at least one sub-channel having an average interference power within a channel detection time period less than a first threshold or at least one sub-channel having a maximum interference power less than a second threshold, the first selecting sub-unit 4031 of the selecting unit 403 selects the at least one sub-channel as the standby control channel.

If multiple standby control channels are selected, the first selecting sub-unit 4031 may maintain a standby control channel list. Multiple standby control channels in the standby control channel list have a priority order, which is set as that the larger the spectrum span of a standby control channel to the main control channel, the higher the priority of the standby control channel.

In other word, if multiple sub-channels have the average interference power within the channel detection time period less than the first threshold or the maximum interference power less than the second threshold, the first selecting sub-unit 4031 selects a sub-channel having a largest spectrum span to the main control channel as the standby control channel preferably.

An object of selecting the standby control channel in this way is to select a sub-channel far away from the main control channel as the standby control channel, to reduce a correlation between the standby control channel and the main control channel. In this way, it is avoided that the selected standby control channel is seriously interfered from an interference signal interfering with the main control channel.

In addition, the priority order of the multiple standby control channels in the standby control channel list may be determined by average interference powers or maximum interference powers of standby control channels. That is, the smaller the average interference power or the maximum interference power, the higher the priority of the standby control channel.

It can be understood that, if the first selecting sub-unit 4031 selects only one standby control channel, the first detecting unit 401 may start to perform the detection from the sub-channel having a largest spectrum span to the main control channel, and the first selecting sub-unit 4031 selects the first one of the detected sub-channels having an average interference power within the channel detection time period less than a preset threshold or a maximum interference power less than a preset threshold as the standby control channel.

In a second way, the second detecting unit 402 will detect sub-channels other than the main control channel sequentially. For example, the second detecting unit 402 detects all sub-channels in an ascending order of sub-channel numbers or in a descending order thereof in sequence. The second selecting sub-unit 4032 of the selecting unit 403 selects one or more sub-channels having an average interference power within the channel detection time period less than the first threshold or a maximum interference power less than the second threshold as the standby control channel.

If multiple standby control channels are selected, the second selecting sub-unit 4032 may maintain a standby control channel list. Similarly, the multiple standby control channels in the standby control channel list have a priority order, for example, the priority order can be set as that the smaller the average interference power or the smaller the maximum interference power, the higher the priority of the standby control channel.

In other word, if multiple sub-channels have the average interference power within the channel detection time period less than a preset threshold or the maximum interference power less than a preset threshold, the second selecting sub-unit 4032 will preferably select a channel having a smaller average interference power or a smaller maximum interference power as the standby control channel. In this way, the sub-channel having less interference is selected from the sub-channels as the standby control channel.

It can be understood that, if the second selecting sub-unit 4032 selects only one standby control channel, the second detecting unit 402 may perform a detection on sub-channels other than the main control channel in sequence. For example, the second detecting unit 402 detects all sub-channels in an ascending order of sub-channel numbers or in a descending order thereof in sequence. The second selecting sub-unit 4032 selects a sub-channel having a smallest average interference power within the channel detection time period or a sub-channel having a smallest maximum interference power as the standby control channel.

The broadcasting unit 404 broadcasts an identifier of the standby control channel selected by the first selecting sub-unit 4031 or the second selecting sub-unit 4032 to all STAs on the main control channel, to notify all STAs of a spectrum position of the standby control channel. Specifically, the identifier of the standby control channel may be any unique symbol indicating the standby control channel, for example, a channel number.

In order to enable an asleep STA to rapidly receive the identifier of the standby control channel after waking up, the broadcasting unit 404 can periodically broadcast the identifier of the selected standby control channel on the main control channel.

It can be understood that the broadcasting unit 404 may periodically broadcast the standby control channel list on the main control channel in the case that the first selecting sub-unit 4031 or the second selecting sub-unit 4032 selects multiple standby control channels and maintains the standby control channel list.

The processing unit 405 determines whether the main control channel is interfered.

For example, the processing unit 405 may determine whether the main control channel is interfered based on a case that the AP or the STA decodes a control frame on the main control channel. The processing unit 405 may consider that the main control channel is interfered in the case that the AP or the STA can not correctly decode the control frame on the main control channel.

Alternatively, the processing unit 405 may preset an interference power threshold, and consider that the main control channel is interfered when an interference signal having a power larger than the preset interference power threshold is detected. In the embodiment, the interference signal is a signal bringing damage for receiving and sending a useful signal; and the interference signal may come from other WLAN system, or may be other unknown interference signal.

In addition, the processing unit 405 can further receive an interference condition of the main control channel reported by the STA.

For example, the STA may report fault information to the processing unit 405 in a case that the STA can not correctly receive control information or scheduling information on the main control channel or the STA detects the interference of the main control channel. A way of reporting the fault information is to report the fault information on the main control channel or a selected sub-channel having better communication quality.

The reported fault information at least includes one of the following information: interference power of the main control channel/standby control channel, signal to interference plus noise ratio (Signal to Interference plus Noise Ratio, SINR), an indication that the main control channel/the standby control channel in unavailable, and information for indicating a channel condition. For example, 2 bits may be used to indicate a condition of the main control channel/standby control channel, 11 indicates that the channel condition is very good, 10 indicates that the channel condition is good, 01 indicates that the channel condition is poor, 00 indicates that the channel condition is very poor. The processing unit 405 determines whether the main control channel is interfered based on the information reported by the STA.

The processing unit 405 uses the selected standby control channel as a data channel in a case that it is determined that the main control channel is not interfered currently, and the data channel is often used to transfer service data, for example, a video, voice, a picture. The processing unit 405 may schedule uplink and downlink data to transmit them on the standby control channel, so as to take full advantage of resource. Then, the processing unit 405 continues detecting whether the main control channel is interfered.

The processing unit 405 switches from the main control channel to the standby control channel, to transmit at least one of the control information and the scheduling information to all STAs within a coverage of the AP on the standby control channel, when the interference of the main control channel is detected. The processing unit 405 sends a channel switching indication frame to all STAs within a coverage of the AP, to indicate all STAs to receive the control information or the scheduling information on the standby control channel based on indication of the channel switching indication frame after the channel switching indication frame sent by the processing unit 405 is received.

In a process of switching to the standby control channel from the main control channel, the processing unit 405 may send the same control information on the main control channel and the standby control channel simultaneously, to raise reliability of data sent by the control channel. After the main control channel is successfully switched to the standby control channel, the processing unit 405 only needs to send the control information and the scheduling information on the standby control channel, to save signaling overhead.

The processing unit 405 further determines whether the number of the standby control channel selected by the first selecting sub-unit 4031 or the second selecting sub-unit 4032 is one after the main control channel is switched to the standby control channel. The selected standby control channel is a first standby control channel in a case that the number of the standby control channel selected by the first selecting sub-unit 4031 or the second selecting sub-unit 4032 is one. Then, the first selecting sub-unit 4031 or the second selecting sub-unit 4032 selects another sub-channel having a smallest average interference power or a smallest maximum interference power from sub-channels other than the selected first standby control channel and the main control channel as a second standby control channel.

When detecting that the first standby control channel is disturbed, the processing unit 405 switches to the second standby control channel from the first standby control channel, to transmit at least one of the control information and the scheduling information on the second standby control channel. If the data can not be transmitted due to the interference of the second standby control, the first selecting sub-unit 4031 or the second selecting sub-unit 4032 selects a third standby control channel, or selects a third standby control based on the standby control channel list; and the processing unit 405 switches to the third standby control channel from the second standby control channel, and so forth.

In the embodiment, the selecting unit selects at least one sub-channel from the sub-channels other than the main control channel as the standby control channel. Once the interference of the main control channel is detected the processing unit switches to the standby control channel from the main control channel, to transmit at least one of the control information and the scheduling information on the standby control channel. In this way, the AP can transmit the at least one of the control information and the scheduling information on the selected standby control channel which can communicate normally in a case that the main control channel has been interfered and can not communicate normally. Therefore, control signaling interaction in the system can be recovered rapidly, and communication efficiency of the control channel is raised. In addition, the processing unit transmits data information on the selected standby control channel when the main control channel is not interfered, to take full advantage of the system resource.

An access point according to an embodiment of the present invention will be further illustrated below. With reference to Figure 5, an access point AP according to another embodiment of the present invention includes a processor 501 and a memory 502 configured to store and buffer codes.

The processor 501 is configured to:
select at least one sub-channel from sub-channels other than a main control channel as a standby control channel;
periodically broadcast an identifier of the standby control channel to all stations STAs within a coverage of the AP on the main control channel, to notify the all STAs of a spectrum position of the standby control channel; and
switch from the main control channel to the standby control channel, to transmit at least one of control information and scheduling information on the standby control channel, in a case that interference of the main control channel is detected; and send a channel switching indication frame to the STA, to notify the STA to switch to the standby control channel and receive the at least one of the control information and the scheduling information.

In the embodiment, the processor selects at least one sub-channel from the sub-channels other than the main control channel as the standby control channel, and switches from the main control channel to the standby control channel, to transmit at least one of the control information and the scheduling information on the standby control channel, in a case that interference of the main control channel is detected. In this way, the processor can transmit at least one of the control information and the scheduling information on the selected standby control channel which can communicate normally in a case that the main control channel has been interfered and can not communicate normally. Therefore, control signaling interaction in the system can be recovered rapidly, and communication efficiency in the control channel is raised, and resource waste caused by transmitting transmit same information on multiple control channels simultaneously is avoided.

It also should be illustrated that the device embodiment described above is just schematic, a unit described as a separate component may be or may not be separated in physical, a component displayed as a unit may be or may not be a physical unit, that is, may placed in a same position or may be distributed in multiple network units. A part of or all modules may be selected if desired to realize the object of the embodiments. In addition, in the drawings of the device embodiment provided in the present invention, a connection relation between modules indicates that a communication connection exists between the modules, which can be realized as one or more communication buses or signal lines. Those skilled in the art can understand the embodiments without paying any creative work.

It can be known by those skilled in the art based on the description of the above embodiments that the present invention can be realized by software and necessary common hardware or by specialized hardware including a specialized integrated circuit, a specialized CPU, a specialized memory and a specialized element. In general, a function realized by a computer program can be easy to be realized by hardware, also, a hardware structure for realizing the same function may also be various, for example, an analogue circuit, a digital circuit or a specialized circuit. However, software program realization is a better embodiment for the present invention in most cases. Based on this understanding, a part of the technical solution of the present invention contributing to the conventional technology may be embodied in a software product way, the computer software product is stored in a readable storage medium, such as a computer floppy disk, a U-disk, a mobile hard disk, a readable only memory (ROM, Read-Only Memory), a random access memory (RAM, Random Access Memory), a disk or an optical disc, which includes several instructions to enable a computer device (may be a personal computer, a server or a network device) to perform a method described in each embodiment of the present invention.

## Claims

1. A channel switching method, comprising:
selecting (101), by an access point AP, at least one sub-channel from sub-channels other than a main control channel as a standby control channel;
broadcasting (102), periodically by the AP, an identifier of the standby control channel to a station STA within a coverage of the AP on the main control channel, to notify the STA of a spectrum position of the standby control channel; and
switching (103), by the AP, from the main control channel to the standby control channel, to transmit at least one of control information and scheduling information on the standby control channel, in a case that the AP detects that the main control channel is interfered; and sending, by the AP, a channel switching indication frame to the STA, to notify the STA to switch to the standby control channel and receive the at least one of the control information and the scheduling information.

2. The method according to claim 1, wherein before the selecting, by the AP, at least one sub-channel from the sub-channels other than the main control channel as the standby control channel, the method further comprises:
detecting, by the AP, average interference powers or maximum interference powers of the sub-channels in an descending order of spectrum spans between the sub-channels and the main control channel;
wherein the selecting, by the AP, at least one sub-channel from the sub-channels other than the main control channel as the standby control channel comprises:
in a case that the AP determines that at least one sub-channel has an average interference power less than a first threshold or a maximum interference power less than a second threshold, selecting, by the AP, the at least one sub-channel as the standby control channel.

3. The method according to claim 1, wherein before the selecting, by the AP, at least one sub-channel from the sub-channels other than the main control channel as the standby control channel, the method further comprises:
detecting, by the AP, average interference powers or maximum interference powers of all sub-channels other than the main control channel;
wherein the selecting, by the AP, at least one sub-channel from the sub-channels other than the main control channel as the standby control channel comprises:
selecting, by the AP, at least one sub-channel having an average interference power less than a first threshold or a maximum interference power less than a second threshold as the standby control channel.

4. The method according to claim 2 or 3, wherein in a case that there is one standby control channel and the standby control channel is a first standby control channel, after the switching, by the AP, from the main control channel to the first standby control channel, the method further comprises:
selecting, by the AP, a sub-channel having a smallest average interference power or a smallest maximum interference power from sub-channels other than the first standby control channel and the main control channel, as a second standby control channel; and
switching, by the AP, from the first standby control channel to the second standby control channel, to transmit at least one of the control information and the scheduling information on the second standby control channel, in a case that the AP detects that the first standby control channel is interfered.

5. The method according to claim 2 or 3, wherein in a case that there are a plurality of standby control channels, the switching, by the AP, from the main control channel to the standby control channel comprise: the switching, by the AP, from the main control channel to a standby control channel having a smallest average interference power or a smallest maximum interference power of the plurality of standby control channels, and
the method further comprises:
switching, by the AP, from a current standby control channel to another standby control channel, to transmit at least one of the control information and the scheduling information on the another standby control channel, in a case that the AP detects that a current standby control channel is interfered.

6. The method according to claim 1, further comprising: using, by the AP, the standby control channel as a data channel in a case that the AP does not detect that the main control channel is interfered.

7. An access point, AP, comprising:
a selecting unit (301, 403) configured to select at least one sub-channel from sub-channels other than a main control channel as a standby control channel;
a broadcasting unit (302, 404) configured to periodically broadcast an identifier of the standby control channel to a station STA within a coverage of the AP on the main control channel, to notify the STA of a spectrum position of the standby control channel; and
a processing unit (303, 405) configured to switch from the main control channel to the standby control channel, to transmit at least one of control information and scheduling information on the standby control channel, in a case that it is detected that the main control channel is interfered; and send a channel switching indication frame to the STA, to notify the STA to switch to the standby control channel and receive the at least one of the control information and the scheduling information.

8. The AP according to claim 7, further comprising:
a first detecting unit (401) configured to detect average interference powers or maximum interference powers of the sub-channels in an descending order of spectrum spans between the sub-channels and the main control channel;
wherein the selecting unit (403) comprises: a first selecting sub-unit (4031) configured to, in a case that at least one sub-channel having an average interference power less than a first threshold or a maximum interference power less than a second threshold is determined, select the at least one sub-channel as the standby control channel.

9. The AP according to claim 7, further comprising:
a second detecting unit (402) configured to detect average interference powers or maximum interference powers of all sub-channels other than the main control channel;
wherein the selecting unit (403) further comprises a second selecting sub-unit (4032) configured to select at least one sub-channel having an average interference power less than a first threshold or a maximum interference power less than a second threshold, as the standby control channel.

10. The AP according to claim 8 or 9, wherein in a case that there is one standby control channel and the standby control channel is a first standby control channel, the first selecting sub-unit (4031) or the second selecting sub-unit (4032) is further configured to:
select a sub-channel having a smallest average interference power or a smallest maximum interference power from sub-channels other than the first standby control channel and the main control channel, as a second standby control channel;
and the processing unit (303, 405) is further configured to:
switch from the first standby control channel to the second standby control channel, to transmit at least one of the control information and the scheduling information on the second standby control channel, in a case that it is detected that the first standby control channel is interfered.

11. The AP according to claim 8 or 9, wherein in a case that there are a plurality of standby control channels, the processing unit (303, 405) is further configured to switch from the main control channel to a standby control channel having a smallest average interference power or a smallest maximum interference power of the plurality of standby control channels; and
switch from a current standby control channel to another standby control channel, to transmit at least one of the control information and the scheduling information on the another standby control channel, in a case that it is detected that the current standby control channel is interfered.

12. The AP according to claim 7, wherein the processing unit (303, 405) is further configured to use the standby control channel as a data channel in a case that it is not detected that the main control channel is interfered currently.

## Patentansprüche

1. Kanalumschaltverfahren, das Folgendes umfasst:
Auswählen (101) durch einen Zugangspunkt AP von mindestens einem Unterkanal aus Unterkanälen außer einem Hauptsteuerkanal, als einen Standbysteuerkanal;
regelmäßiges Rundsenden (102) durch den AP einer Kennung des Standbysteuerkanals auf dem Hauptsteuerkanal an eine Station STA innerhalb einer Abdeckung des AP, um die STA über eine Spektrumposition des Standbysteuerkanals zu benachrichtigen; und
in einem Fall, in dem der AP detektiert, dass der Hauptsteuerkanal gestört ist, Umschalten (103) durch den AP vom Hauptsteuerkanal zum Standbysteuerkanal, um mindestens eines von Steuerinformationen und Planungsinformationen auf dem Standbysteuerkanal zu übertragen; und Senden durch den AP eines Kanalumschaltanzeigerahmens an die STA, um die STA zu benachrichtigen, zum Standbysteuerkanal umzuschalten, und die mindestens einen der Steuerinformationen und der Planungsinformationen zu empfangen.

2. Verfahren nach Anspruch 1, wobei vor dem Auswählen durch den AP mindestens eines Unterkanals aus den Unterkanälen außer dem Hauptsteuerkanal als den Standbysteuerkanal das Verfahren ferner Folgendes umfasst:
Detektieren durch den AP von durchschnittlichen Interferenzleistungen oder maximalen Interferenzleistungen der Unterkanäle in einer absteigenden Reihenfolge von Spektrumspannen zwischen den Unterkanälen und dem Hauptsteuerkanal;
wobei das Auswählen durch den AP mindestens eines Unterkanals aus den Unterkanälen außer dem Hauptsteuerkanal als den Standbysteuerkanal Folgendes umfasst:
in einem Fall, in dem der AP bestimmt, dass mindestens ein Unterkanal eine durchschnittliche Interferenzleistung von weniger als einem ersten Schwellwert oder eine maximale Interferenzleistung von weniger als einem zweiten Schwellwert aufweist, Auswählen durch den AP des mindestens einen Unterkanals als den Standbysteuerkanal.

3. Verfahren nach Anspruch 1, wobei vor dem Auswählen durch den AP mindestens eines Unterkanals aus den Unterkanälen außer dem Hauptsteuerkanal als den Standbysteuerkanal das Verfahren ferner Folgendes umfasst:
Detektieren durch den AP von durchschnittlichen Interferenzleistungen oder maximalen Interferenzleistungen aller Unterkanäle außer dem Hauptsteuerkanal;
wobei das Auswählen durch den AP mindestens eines Unterkanals aus den Unterkanälen außer dem Hauptsteuerkanal als den Standbysteuerkanal Folgendes umfasst:
Auswählen durch den AP von mindestens einem Unterkanal, der eine durchschnittliche Interferenzleistung von weniger als einem ersten Schwellwert oder eine maximale Interferenzleistung von weniger als einem zweiten Schwellwert aufweist, als den Standbysteuerkanal.

4. Verfahren nach Anspruch 2 oder 3, wobei in einem Fall, dass es einen Standbysteuerkanal gibt und der Standbysteuerkanal ein erster Standbysteuerkanal ist, das Verfahren nach dem Umschalten durch den AP vom Hauptsteuerkanal zum ersten Standbysteuerkanal ferner Folgendes umfasst:
Auswählen durch den AP eines Unterkanals, der eine kleinste durchschnittliche Interferenzleistung oder eine kleinste maximale Interferenzleistung von Unterkanälen außer dem ersten Standbysteuerkanal und dem Hauptsteuerkanal aufweist, als einen zweiten Standbysteuerkanal und
in einem Fall, in dem der AP detektiert, dass der erste Standbysteuerkanal gestört ist, Umschalten durch den AP vom ersten Standbysteuerkanal zum zweiten Standbysteuerkanal, um mindestens eines der Steuerinformationen und der Planungsinformationen auf dem zweiten Standbysteuerkanal zu übertragen.

5. Verfahren nach Anspruch 2 oder 3, wobei in einem Fall, dass es eine Vielzahl von Standbysteuerkanälen gibt, das Umschalten durch den AP vom Hauptsteuerkanal zum Standbysteuerkanal Folgendes umfasst: das Umschalten durch den AP vom Hauptsteuerkanal zu einem Standbysteuerkanal, der eine kleinste durchschnittliche Interferenzleistung oder eine kleinste maximale Interferenzleistung der Vielzahl von Standbysteuerkanälen aufweist, und
das Verfahren ferner Folgendes umfasst:
in einem Fall, in dem der AP detektiert, dass ein aktueller Standbysteuerkanal gestört ist, Umschalten durch den AP von einem aktuellen Standbysteuerkanal zu einem anderen Standbysteuerkanal, um mindestens eines der Steuerinformationen und der Planungsinformationen auf dem anderen Standbysteuerkanal zu übertragen.

6. Verfahren nach Anspruch 1, das ferner Folgendes umfasst: in einem Fall, in dem der AP nicht detektiert, dass der Hauptsteuerkanal gestört ist, Verwenden durch den AP des Standbysteuerkanals als einen Datenkanal.

7. Zugangspunkt, AP, der Folgendes umfasst:
eine Auswahleinheit (301, 403), die dazu ausgelegt ist, mindestens einen Unterkanal aus Unterkanälen außer einem Hauptsteuerkanal als einen Standbysteuerkanal auszuwählen;
eine Rundsendeeinheit (302, 404), die dazu ausgelegt ist, auf dem Hauptsteuerkanal eine Kennung des Standbysteuerkanals an eine Station STA innerhalb einer Abdeckung des AP rundzusenden, um die STA über eine Spektrumposition des Standbysteuerkanals zu benachrichtigen; und
eine Verarbeitungseinheit (303, 405), die dazu ausgelegt ist, in einem Fall, in dem detektiert wird, dass der Hauptsteuerkanal gestört ist, vom Hauptsteuerkanal zum Standbysteuerkanal umzuschalten, um mindestens eines von Steuerinformationen und Planungsinformationen auf dem Standbysteuerkanal zu übertragen; und einen Kanalumschaltanzeigerahmen an die STA zu senden, um die STA zu benachrichtigen, zum Standbysteuerkanal umzuschalten, und die mindestens einen der Steuerinformationen und der Planungsinformationen zu empfangen.

8. AP nach Anspruch 7, der ferner Folgendes umfasst:
eine erste Detektionseinheit (401), die dazu ausgelegt ist, durchschnittliche Interferenzleistungen oder maximale Interferenzleistungen der Unterkanäle in einer absteigenden Reihenfolge von Spektrumspannen zwischen den Unterkanälen und dem Hauptsteuerkanal zu detektieren;
wobei die Auswahleinheit (403) Folgendes umfasst: eine erste Auswahluntereinheit (4031), die dazu ausgelegt ist, in einem Fall, in dem mindestens ein Unterkanal, der eine durchschnittliche Interferenzleistung von weniger als einem ersten Schwellwert oder eine maximale Interferenzleistung von weniger als einem zweiten Schwellwert aufweist, bestimmt wird, den mindestens einen Unterkanal als den Standbysteuerkanal auszuwählen.

9. AP nach Anspruch 7, der ferner Folgendes umfasst:
eine zweite Detektionseinheit (402), die dazu ausgelegt ist, durchschnittliche Interferenzleistungen oder maximale Interferenzleistungen aller Unterkanäle außer dem Hauptsteuerkanal zu detektieren;
wobei die Auswahleinheit (403) ferner eine zweite Auswahluntereinheit (4032) umfasst, die dazu ausgelegt ist, mindestens einen Unterkanal, der eine durchschnittliche Interferenzleistung von weniger als einem ersten Schwellwert oder eine maximale Interferenzleistung von weniger als einem zweiten Schwellwert aufweist, als den Standbysteuerkanal auszuwählen.

10. AP nach Anspruch 8 oder 9, wobei in einem Fall, dass es einen Standbysteuerkanal gibt und der Standbysteuerkanal ein erster Standbysteuerkanal ist, die erste Auswahluntereinheit (4031) oder die zweite Auswahluntereinheit (4032) ferner zu Folgendem ausgelegt ist:
Auswählen eines Unterkanals, der eine kleinste durchschnittliche Interferenzleistung oder eine kleinste maximale Interferenzleistung von Unterkanälen außer dem ersten Standbysteuerkanal und dem Hauptsteuerkanal aufweist, als einen zweiten Standbysteuerkanal;
und die Verarbeitungseinheit (303, 405) ferner zu Folgendem ausgelegt ist:
in einem Fall, in dem detektiert wird, dass der erste Standbysteuerkanal gestört ist, vom ersten Standbysteuerkanal zum zweiten Standbysteuerkanal umzuschalten, um mindestens eines der Steuerinformationen und der Planungsinformationen auf dem zweiten Standbysteuerkanal zu übertragen.

11. AP nach Anspruch 8 oder 9, wobei in einem Fall, dass es eine Vielzahl von Standbysteuerkanälen gibt, die Verarbeitungseinheit (303, 405) ferner dazu ausgelegt ist, vom Hauptsteuerkanal zu einem Standbysteuerkanal, der eine kleinste durchschnittliche Interferenzleistung oder eine kleinste maximale Interferenzleistung der Vielzahl von Standbysteuerkanälen aufweist, umzuschalten; und
in einem Fall, in dem detektiert wird, dass der aktuelle Standbysteuerkanal gestört ist, Umschalten von einem aktuellen Standbysteuerkanal zu einem anderen Standbysteuerkanal, um mindestens eines der Steuerinformationen und der Planungsinformationen auf dem anderen Standbysteuerkanal zu übertragen.

12. AP nach Anspruch 7, wobei in einem Fall, in dem nicht detektiert wird, dass der Hauptsteuerkanal derzeit gestört ist, die Verarbeitungseinheit (303, 405) ferner dazu ausgelegt ist, den Standbysteuerkanal als einen Datenkanal zu verwenden.

## Revendications

1. Procédé de commutation de canaux, comprenant les étapes consistant à :
sélectionner (101), par un point d'accès, AP, au moins un sous-canal parmi des sous-canaux distincts d'un canal de commande principal comme canal de commande de secours ;
diffuser (102), périodiquement par l'AP, un identifiant du canal de commande de secours vers une station STA située dans une zone de couverture de l'AP sur le canal de commande principal, afin d'informer la STA d'une position spectrale du canal de commande de secours ; et
commuter (103), par l'AP, du canal de commande principal vers le canal de commande de secours, afin d'émettre des informations de commande et/ou des informations d'ordonnancement sur le canal de commande de secours, dans le cas où l'AP détecte que le canal de commande principal subit des interférences ; et envoyer, par l'AP, une trame d'indication de commutation de canaux à la STA, afin d'ordonner à la STA de commuter vers le canal de commande de secours et de recevoir lesdites informations de commande et/ou informations d'ordonnancement.

2. Procédé selon la revendication 1, le procédé, avant l'étape consistant à sélectionner, par l'AP, au moins un sous-canal parmi les sous-canaux distincts du canal de commande principal comme canal de commande de secours, comprenant également l'étape consistant à :
détecter, par l'AP, des puissances d'interférence moyennes ou des puissances d'interférence maximales des sous-canaux par ordre décroissant des étendues spectrales situées entre les sous-canaux et le canal de commande principal ;
dans lequel procédé l'étape consistant à sélectionner, par l'AP, au moins un sous-canal parmi les sous-canaux distincts du canal de commande principal comme canal de commande de secours comprend l'étape consistant à :
dans le cas où l'AP détermine qu'au moins un sous-canal présente une puissance d'interférence moyenne inférieure à un premier seuil ou une puissance d'interférence maximale inférieure à un deuxième seuil, sélectionner, par l'AP, au moins un sous-canal comme canal de commande de secours.

3. Procédé selon la revendication 1, le procédé, avant l'étape consistant à sélectionner, par l'AP, au moins un sous-canal parmi les sous-canaux distincts du canal de commande principal comme canal de commande de secours, comprenant également l'étape consistant à :
détecter, par l'AP, des puissances d'interférence moyennes ou des puissances d'interférence maximales de tous les sous-canaux distincts du canal de commande principal ;
dans lequel procédé l'étape consistant à sélectionner, par l'AP, au moins un sous-canal parmi les sous-canaux différents du canal de commande principal comme canal de commande de secours comprend également l'étape consistant à :
sélectionner, par l'AP, au moins un sous-canal qui présente une puissance d'interférence moyenne inférieure à un premier seuil ou une puissance d'interférence maximale inférieure à un deuxième seuil comme canal de commande de secours.

4. Procédé selon la revendication 2 ou 3, le procédé, dans le cas où il existe un canal de commande de secours et où le canal de commande de secours est un premier canal de commande de secours, après l'étape consistant à commuter, par l'AP, du canal de commande principal vers le premier canal de commande de secours, comprenant également l'étape consistant à :
sélectionner, par l'AP, un sous-canal qui présente une puissance d'interférence moyenne la plus faible ou une puissance d'interférence maximale la plus faible parmi les sous-canaux distincts du premier canal de commande de secours et du premier canal de commande principal comme deuxième canal de commande de secours ; et
commuter, par l'AP, du premier canal de commande de secours vers le deuxième canal de commande de secours, afin d'émettre les informations de commande et/ou les informations d'ordonnancement sur le deuxième canal de commande de secours, dans le cas où l'AP détecte que le premier canal de commande de secours subit des interférences.

5. Procédé selon la revendication 2 ou 3, dans lequel, dans le cas où il existe une pluralité de canaux de commande de secours, la commutation, par l'AP, du canal de commande principal vers le canal de commande de secours comprend : la commutation, par l'AP, du canal de commande principal vers un canal de commande de secours qui présente une puissance d'interférence moyenne la plus faible ou une puissance d'interférence maximale la plus faible dans la pluralité de canaux de commande de secours,
le procédé comprenant également l'étape consistant à :
commuter, par l'AP, d'un canal de commande de secours actuel vers un autre canal de commande de secours, afin d'émettre les informations de commande et/ou les informations d'ordonnancement sur ledit autre canal de commande de secours, dans le cas où l'AP détecte que le canal de commande de secours actuel subit des interférences.

6. Procédé selon la revendication 1, comprenant également l'étape consistant à : utiliser, par l'AP, le canal de commande de secours comme canal de données dans le cas où l'AP ne détecte pas que le canal de commande principal subit des interférences.

7. Point d'accès, AP, comprenant :
une unité de sélection (301, 403) conçue pour sélectionner au moins un sous-canal parmi des sous-canaux distincts d'un canal de commande principal comme canal de commande de secours ;
une unité de diffusion (302, 404) conçue pour diffuser périodiquement un identifiant du canal de commande de secours vers une station STA située dans une zone de couverture de l'AP sur le canal de commande principal, afin d'informer la STA d'une position spectrale du canal de commande de secours ; et
une unité de traitement (303, 405) conçue pour commuter du canal de commande principal vers le canal de commande de secours, afin d'émettre des informations de commande et/ou des informations d'ordonnancement sur le canal de commande de secours, dans le cas où il est détecté que le canal de commande principal subit des interférences ; et envoyer une trame d'indication de commutation de canaux à la STA, afin d'ordonner à la STA de commuter vers le canal de commande de secours et de recevoir lesdites informations de commande et/ou informations d'ordonnancement.

8. AP selon la revendication 7, comprenant également :
une première unité de détection (401) conçue pour détecter des puissances d'interférence moyennes ou des puissances d'interférence maximales des sous-canaux par ordre décroissant des étendues spectrales situées entre les sous-canaux et le canal de commande principal ;
dans lequel l'unité de sélection (403) comprend : une première sous-unité de sélection (4031) conçue pour, dans le cas où au moins un sous-canal présentant une puissance d'interférence moyenne inférieure à un premier seuil ou une puissance d'interférence maximale inférieure à un deuxième seuil est déterminé, sélectionner ledit au moins un sous-canal comme canal de commande de secours.

9. AP selon la revendication 7, comprenant également :
une deuxième unité de détection (402) conçue pour détecter des puissances d'interférence moyennes ou des puissances d'interférence maximales de tous les sous-canaux distincts du canal de commande principal ;
dans lequel l'unité de sélection (403) comprend également une deuxième sous-unité de sélection (4032) conçue pour sélectionner au moins un sous-canal qui présente une puissance d'interférence moyenne inférieure à un premier seuil ou une puissance d'interférence maximale inférieure à un deuxième seuil comme canal de commande de secours.

10. AP selon la revendication 8 ou 9, dans lequel, dans le cas où il existe un canal de commande de secours et où le canal de commande de secours est un premier canal de commande de secours, la première sous-unité de sélection (4031) ou la deuxième sous-unité de sélection (4032) est également conçue pour :
sélectionner un sous-canal qui présente une puissance d'interférence moyenne la plus faible ou une puissance d'interférence maximale la plus faible parmi les sous-canaux distincts du premier canal de commande de secours et du premier canal de commande principal comme deuxième canal de commande de secours ;
et l'unité de traitement (303, 405) est également conçue pour :
commuter du premier canal de commande de secours vers le deuxième canal de commande de secours, afin d'émettre les informations de commande et/ou les informations d'ordonnancement sur le deuxième canal de commande de secours, dans le cas où il est détecté que le premier canal de commande de secours subit des interférences.

11. AP selon la revendication 8 ou 9, dans lequel, dans le cas où il existe une pluralité de canaux de commande de secours, l'unité de traitement (303, 405) est également conçue pour commuter du canal de commande principal vers un canal de commande de secours qui présente une puissance d'interférence moyenne la plus faible ou une puissance d'interférence maximale la plus faible dans la pluralité de canaux de commande de secours ; et
commuter d'un canal de commande de secours actuel vers un autre canal de commande de secours, afin d'émettre les informations de commande et/ou les informations d'ordonnancement sur ledit autre canal de commande de secours, dans le cas où il est détecté que le canal de commande de secours actuel subit des interférences.

12. AP selon la revendication 7, dans lequel l'unité de traitement (303, 405) est également conçue pour utiliser le canal de commande de secours comme canal de données dans le cas où il n'est pas détecté que le canal de commande principal subit actuellement des interférences.
